# EUROPÄISCHE PATENTSCHRIFT

(11) **EP 3 782 930 B1**
(45) Veröffentlichungstag und Bekanntmachung des Hinweises auf die Patenterteilung: **06.07.2022**
(21) Anmeldenummer: 19193378.7
(22) Anmeldetag: 23.08.2019
(51) Int. Cl.: B65G 1/04, B65G 57/30

(54) **STAPELLAGERANORDNUNG**
STACK STORAGE ASSEMBLY
DISPOSITIF DE STOCKAGE PAR EMPILEMENT

(43) Veröffentlichungstag der Anmeldung: 24.02.2021
(73) Patentinhaber: Jungheinrich Aktiengesellschaft, 22047 Hamburg (DE)
(72) Erfinder: Harting, Elmar, 63075 Offenbach (DE); Cavelius, Jörg, 61118 Bad Vilbel (DE); Becker, Michael, 63512 Hainburg (DE)
(74) Vertreter: Keil & Schaafhausen Patentanwälte PartGmbB

(56) Entgegenhaltungen:
- WO-A1-96/31420
- DE-A1- 19 849 391
- DE-A1-102013 009 340
- DE-B4-102013 009 340
- DE-U1- 29 521 393

## Beschreibung

Die vorliegende Erfindung betrifft eine Stapellageranordnung mit mehreren Behälteraufnahmeräumen und einem Beschickungsbereich, der unterhalb der Behälteraufnahmeräume angeordnet ist.

Eine derartige Stapellageranordnung ist beispielsweise aus EP 1 710 179 B1 bekannt. In einer derartigen Stapellageranordnung können die Behälter mit einer relativ großen Dichte gelagert werden, d.h. es geht wenig Raum für Zugänge verloren. Der einzige Zugang, der notwendig ist, um einen Behälter in die Stapellageranordnung einzulagern oder den Behälter aus der Stapellageranordnung zu entnehmen, wird durch den Beschickungsraum gebildet.

DE 198 49 391 A1 zeigt als nächstliegender Stand der Technik ein Kisten-Stapellager mit mehreren Behälteraufnahmeräumen, in denen Behälter in Form von Stapeln angeordnet sind. Der jeweils unterste Behälter eines Stapels wird durch Halteklinken gehalten, die an einem Träger angeordnet sind. Mehrere parallel verlaufende Träger erstrecken sich in eine einzige Richtung. Äußere Träger sind hierbei durch Stützen abgestützt.

DE 295 21 393 U1 beschreibt eine Vorrichtung zum Stapeln und in Stapeln von Transportkisten, wobei das Stapeln in der Regel mit der Öffnung nach unten erfolgt. Die Transportkisten werden in einer Reihe an einander stoßend zugeführt und gemeinsam angehoben, bis die neu zugeführten Transportkisten an bereits gestapelte Transportkisten von unten anstoßen. Der dann um die neu zugeführten Transportkisten ergänzte Stapel wird weiter angehoben, bis sie neu zugeführten Transportkisten durch Halteeinrichtungen gehalten werden.

Damit ein Beschickungsfahrzeug in dem Beschickungsraum bewegt werden kann, ist es erforderlich, dass der oder die Stapel der Behälter in einem gewissen Abstand vom Boden oder einer anderen Auflagefläche gehalten werden. Hierzu sind im bekannten Fall Halteeinrichtungen in Form von Sperrklinken vorgesehen, die unten an Längsträgern befestigt sind, die über die Länge der Stapellageranordnung durchgehen. Dementsprechend ist jeder Stapel mit seinem unteren Behälter in dem Abstand gehalten. Man verwendet hierzu Halteklinken oder entsprechende Einrichtungen, die im bekannten Fall unterhalb von Längsträgern angeordnet sind. Auf den Längsträgern können noch Ständer angeordnet sein, die eine Begrenzung von Behälteraufnahmeräumen bilden. Die Halteklinken rasten automatisch ein, wenn ein Behälter mit einem darauf befindlichen Stapel von weiteren Behältern angehoben und nach passieren der Halteklinken abgesenkt wird. Zum Entnehmen eines Behälters können die Klinken nach dem Anheben des Stapels entsperrt werden.

Die mechanische Stabilität einer derartigen Stapellageranordnung ist gering.

Der Erfindung liegt die Aufgabe zugrunde, mit geringem Aufwand eine hohe mechanische Stabilität zu erreichen.

Diese Aufgabe wird bei einer Stapellageranordnung gemäß Anspruch 1 gelöst.

Die Rahmenanordnung bildet damit eine "Grundfläche" oder Grundkonstruktion, an der die untersten Behälter eines jeden Stapels befestigt werden können. Die Rahmenanordnung bietet eine höhere Stabilität als eine Anordnung, die lediglich Längsträger aufweist, weil in der Rahmenanordnung längs verlaufende Abschnitte durch quer verlaufende Abschnitte miteinander verbunden sind. Man kann die Rahmenanordnung insgesamt nivellieren, d.h. horizontal ausrichten. Durch die hohe Stabilität ist es möglich, die Anzahl der Stützen, mit denen die Stapellageranordnung auf dem Fußboden oder einer anderen Aufstandsfläche abgestützt ist, klein zu halten.

Erfindungsgemäß weist die Rahmenanordnung für jeden Behälteraufnahmeraum eine Öffnung auf, durch die der Behälteraufnahmeraum beschickbar ist. Damit bekommt jeder Behälteraufnahmeraum eine eigene Öffnung, die entsprechend stabil ausgebildet sein kann und an der man dementsprechend auch Halteklinken oder dergleichen anordnen kann, die dann den untersten Behälter des jeweiligen Stapels so festhalten, dass der Beschickungsraum frei bleibt.

Efindungsgemäß weist die Rahmenanordnung mehrere Module auf, die miteinander verbunden sind, insbesondere an parallel verlaufenden Seitenflächen. Damit ist es möglich, eine Stapellageranordnung herzustellen, die eine relativ große Länge und auch eine relativ große Breite aufweist. Die Rahmenanordnung muss nicht am Stück zu dem Ort transportiert werden, an dem die Stapellageranordnung gebaut werden soll. Vielmehr kann man einzelne Module dorthin transportieren und an Ort und Stelle miteinander verbinden. Die Module können vorzugsweise eine rechteckige Form aufweisen, so dass sie parallel verlaufende Seitenflächen haben, die man leicht miteinander verbinden kann, beispielsweise durch Schraubbolzen oder andere lösbare oder unlösbare Bindungselemente.

Bevorzugterweise weist mindestens ein Modul mehrere Öffnungen auf. Man kann beispielsweise ein Modul mit 2, 3, 4 oder 5 Öffnungen vorsehen. Diese Öffnungen liegen dann vorzugsweise in einer Reihe hintereinander, so dass die Breite des Moduls relativ klein gehalten werden kann, was den Transport und die Handhabung eines derartigen Moduls erleichtert.

Vorzugsweise ist mindestens ein Modul als Gussteil ausgebildet. Ein Gussteil lässt sich kostengünstig herstellen, weist aber eine ausreichende mechanische Stabilität auf.

Vorzugsweise ist an der Oberseite mindestens eines Moduls im Bereich von mindestens einem Rand der Öffnung eine Einführhilfe angeordnet, die insbesondere nach innen in die Öffnung vorsteht und vorzugsweise abgerundet ist. Damit kann man die Öffnung relativ klein halten, weil die Einführhilfe verhindert, dass der Behälter insbesondere bei einer Abwärtsbewegung am Rand der Öffnung hängen bleibt, was insbesondere bei einem Modul aus Gusseisen von Vorteil ist. Die Einführhilfe kann beispielsweise mit einem gerundeten Wandabschnitt geringfügig in die Öffnung hineinragen oder über einen Rand der Öffnung nach innen ragen, so dass der Behälter, wenn er nicht ganz genau mittig geführt wird, an der Einführhilfe zur Anlage kommt, dort aber aufgrund der gerundeten Seite nicht hängen bleibt. Die Einführhilfe kann an das Modul als separates Teil angesetzt werden oder einstückig mit dem Modul verbunden sein.

Vorzugsweise weisen die Öffnungen Ecken auf, in denen jeweils Halteklinken angeordnet sind. Wie oben erwähnt, dienen die Halteklinken dazu, den jeweils untersten Behälter eines Stapels zu halten. Wenn diese Halteklinken in den Ecken der Öffnungen angeordnet sind, dann wirken sie auch auf die Ecken der Behälter. Ein Behälter ist normalerweise in den Ecken am stabilsten. Dementsprechend kann man in der Stapellageranordnung relativ hohe Stapel vorsehen, ohne den untersten Behälter zu überlasten. Die Anordnung der Halteklinken in den Ecken hat darüber hinaus den Vorteil, dass die Behälter von allen Richtungen aus gehalten werden, d.h. sie werden nicht nur in einer ersten Richtung gehalten, sondern auch in einer zweiten Richtung, die quer zur ersten Richtung verläuft.

Vorzugsweise ist jede Halteklinke an einem Träger eines Halteklinkenmoduls angeordnet, der im Rahmen befestigt ist. Dies hat den Vorteil, dass bei einem Defekt das Halteklinkenmodul ausgetauscht werden kann, was sich relativ einfach bewerkstelligen lässt. Das Halteklinkenmodul kann dann außerhalb der Stapellageranordnung repariert werden, falls erforderlich. Man kann auch unterschiedliche Halteklinkenmodule verwenden und diese Halteklinkenmodule dann an die jeweils vorgesehene Belastung anpassen.

Hierbei ist bevorzugt, dass das Haltklinkenmodul in einer Aussparung in der Rahmenanordnung angeordnet ist. Das Haltklinkenmodul steift dann die Rahmenanordnung wieder aus. Durch die Aussparung in der Rahmenanordnung ist für das Haltklinkenmodul kein zusätzlicher Bauraum erforderlich. Die Aussparung kann einfach in einer Ausnehmung bestehen oder sie kann durch die Rahmenanordnung hindurchgehen.

Vorzugsweise ist die Halteklinke um eine Schwenkachse verschwenkbar, die zu zwei benachbarten Seiten der Öffnung einen Winkel kleiner als 90° einschließt, vorzugsweise einen Winkel von etwa 45°. Die Schwenkachse bildet mit zwei benachbarten Seiten der Öffnung ein Dreieck. Die Halteklinken sind also nicht nur an den Ecken angeordnet, sie sind auch von den Ecken aus schräg nach innen in die Öffnung hinein verschwenkbar.

Vorzugsweise sind die Halteklinken als zweiarmige Hebel mit einem inneren Arm und einem äußeren Arm ausgebildet, wobei ein Anschlag für den äußeren Arm vorgesehen ist. Die Schwenkachse liegt also, wenn der Hebel mit seinem äußeren Arm am Anschlag anliegt, in horizontaler Richtung zwischen dem inneren Arm und dem äußeren Arm. Damit lässt sich eine relativ hohe Stabilität der Halteklinke erreichen.

Vorzugsweise ist eine Feder vorgesehen, die den äußeren Arm mit einer Kraft in Richtung auf den Anschlag beaufschlagt. Man stellt damit sicher, dass die Halteklinke immer in eine Halteposition verschwenkt ist, wenn keine anderen äußeren Kräfte auf die Halteklinke wirken. Dies erhöht die Sicherheit beim Beschicken des Stapellagers mit Behältern.

Vorzugsweise ist an jeder Halteklinke ein Geber einer Sensoranordnung angeordnet. Der Geber wirkt mit einem Empfänger zusammen. Die Sensoranordnung kann dann feststellen, ob sich die Halteklinke in einer Halteposition befindet oder nicht. Dies erhöht die Sicherheit beim Beschicken der Stapellageranordnung mit einem Behälter und auch beim Entnehmen eines Behälters aus der Stapellageranordnung. Wenn man beim Beschicken feststellt, dass die Halteklinke sich nicht in ihre Halteposition geschwenkt hat, dann kann man das weitere Absenken des Stapels der Behälter unterbrechen und eine Fehlermeldung ausgeben. Das gleiche gilt bei der Entnahme eines Behälters aus der Stapellageranordnung. Wenn der untere Behälter abgesenkt wird und man mithilfe der Sensoranordnung feststellt, dass die Halteklinken (oder mindestens eine Halteklinke) nicht mit dem nachfolgenden Behälter in Eingriff kommt, weil sie beispielsweise nicht in die Halteposition verschwenkt worden ist, dann kann man das weitere Absenken des Stapels unterbrechen.

Hierbei ist bevorzugt, dass der Geber als Reflektor ausgebildet ist. Man kann dann eine optische Sensoranordnung verwenden, die einen Lichtstrahl auf den Reflektor richtet. Der reflektierte Lichtstrahl kann von der Sensoranordnung erfasst werden. Wenn er erfasst wird, dann ist dies ein Zeichen dafür, dass sich die Halteklinke in die Halteposition verschwenkt hat. Wenn dies nicht der Fall ist, dann steht die Halteklinke falsch.

Hierbei ist bevorzugt, dass der Geber an der Unterseite des inneren Arms angeordnet ist. In diesem Fall kann man andere Teile der Sensoranordnung unterhalb des Stapels der Behälter anordnen, beispielsweise auch auf beweglichen Elementen, wie dem Beschickungsfahrzeug.

Die Erfindung wird im Folgenden anhand eines bevorzugten Ausführungsbeispiels in Verbindung mit der Zeichnung beschrieben. Hierin zeigen:
- Fig. 1: eine schematische Darstellung einer Stapellageranordnung,
- Fig. 2: ein Modul einer Rahmenanordnung,
- Fig. 3: einen vergrößerten Ausschnitt der Stapellageranordnung zur Erläuterung der Rahmenanordnung,
- Fig. 4: ein Halteklinkenmodul in Halteposition,
- Fig. 5: das Halteklinkenmodul in Freigabeposition,
- Fig. 6: das Halteklinkenmodul in einer Ecke einer Öffnung der Rahmenanordnung und
- Fig. 7: eine abgewandelte Ausdrucksform eines Moduls.

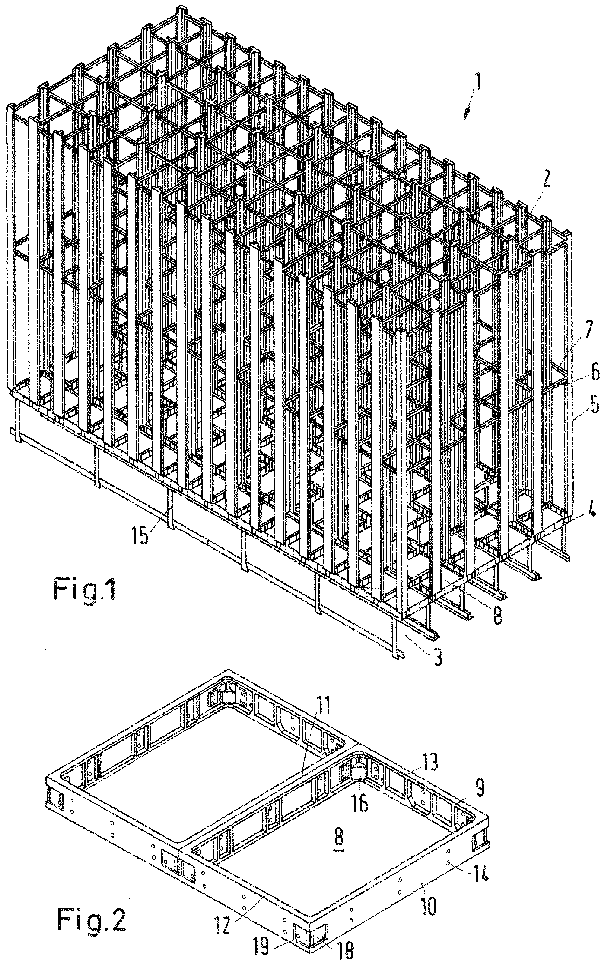

Fig. 1 zeigt schematisch eine Stapellageranordnung 1 mit mehreren Behälteraufnahmeräumen 2 und einem Beschickungsbereich 3, der unterhalb der Behälteraufnahmeräume 2 angeordnet ist.

Zwischen den Behälteraufnahmeräumen 2 und dem Beschickungsraum 3 ist eine Rahmenanordnung 4 angeordnet. Auf der Rahmenanordnung 4 sind Ständer 5 angeordnet, die durch Querstreben 6 und Längsstreben 7 miteinander verbunden sind.

Die Rahmenanordnung 4 weist für jeden Beschickungsraum 3 eine Öffnung 8 auf, durch die der Behälteraufnahmeraum 2 mit dem Beschickungsraum 3 in Verbindung steht.

Die Rahmenanordnung 4 ist aus Modulen 9 zusammengesetzt, die in Fig. 2 schematisch dargestellt sind. Die Module 9 sind als Gussteile, beispielsweise aus Eisen oder Stahl, ausgebildet. Im vorliegenden Fall weist jedes Modul 9 eine Öffnung 8 auf. Es ist aber auch möglich, Module 9 zu verwenden, die mehr als eine Öffnung 8 aufweisen, beispielsweise 2, 3, 4 oder 5 Öffnungen. Die Öffnungen sind dabei vorzugsweise in einer Reihe hintereinander angeordnet. Sie können aber auch in Form einer Matrix mit beispielsweise zwei oder mehr Reihen und zwei oder mehr Spalten angeordnet sein. Die Größe richtet sich hauptsächlich nach den Möglichkeiten die Module 9 zum Montageort zu transportieren.

Jedes Modul 9 ist vorzugsweise rechteckförmig ausgebildet mit zwei Längsseiten 10, 11 und zwei Querseiten 12, 13. Man kann sowohl die Längsseiten 10, 11 als auch die Querseiten 12, 13 verwenden, um das Modul 9 mit benachbarten Modulen zu verbinden. Hierzu können beispielsweise vorgefertigte Durchgangslöcher 14 vorgesehen sein, durch die Schraubbolzen oder andere Befestigungselemente geführt werden können, um benachbarte Module 9 miteinander zu verbinden. Dadurch kann man eine Rahmenanordnung 4 mit einer hohen mechanischen Stabilität herstellen, ohne dass der Transport dieser Rahmenanordnung 4 zu dem Ort der Stapellageranordnung größere Probleme bereiten würde.

Die Rahmenanordnung 4 ist über Stützen 15 auf den Fußboden oder einer anderen Aufstandsfläche aufgestellt. Mithilfe der Stützen 15 kann man die Rahmenanordnung 4 nivellieren, also in einer horizontalen Position ausrichten.

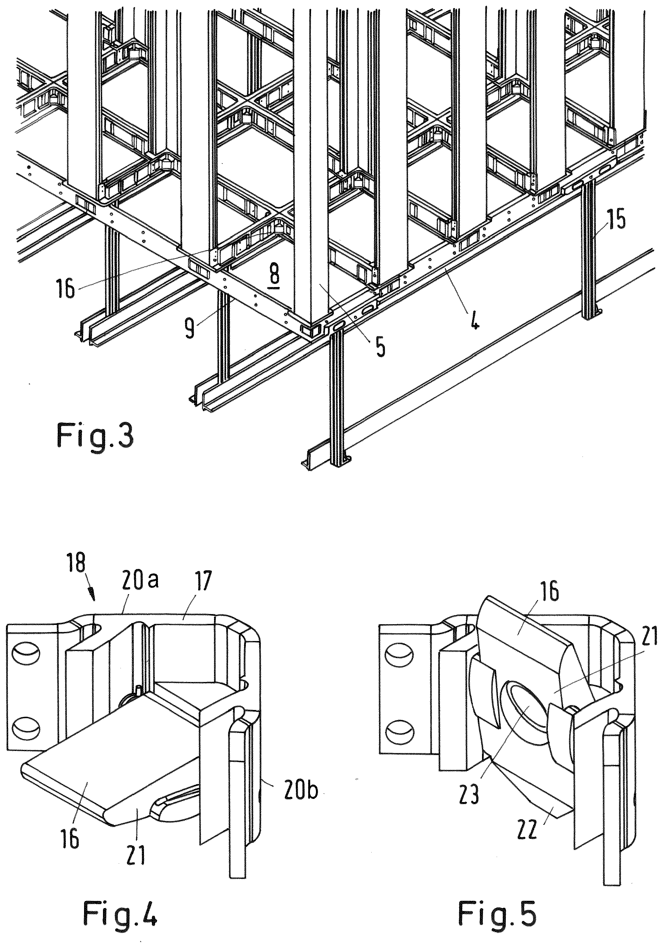

Jede Öffnung 8 weist vier Ecken auf. In jeder Ecke ist eine Halteklinke 16 angeordnet, die im Zusammenhang mit Fig. 4 bis 6 näher beschrieben wird. Die Halteklinke 16 ist an einem Träger 17 eines Halteklinkenmoduls 18 angeordnet. Das Halteklinkenmodul 18 ist in einer Ausnehmung 19 befestigt. Die Ausnehmung 19 ist hier durchgehend ausgebildet, d.h. sie bildet eine Öffnung in dem Modul 9.

Der Träger 17 weist zwei Abschnitte20a, 20b auf, die unter einem rechten Winkel zueinander angeordnet sind, also etwa 90°. Die Halteklinke 16 ist um eine Schwenkachse verschwenkbar, die mit beiden Abschnitten 20a, 20b in Eingriff steht und dann zu zwei benachbarten Seiten der Öffnung 8 einen Winkel kleiner als 90° einschließt. Im vorliegenden Fall schließt die Schwenkachse mit den benachbarten Seiten der Öffnung 8 einen Winkel von etwa 45° ein.

Die Halteklinke 16 ist als zweiarmiger Hebel mit einem inneren Arm 21 und einem äußeren Arm 22 ausgebildet, wobei ein Anschlag für den äußeren Arm 22 vorgesehen ist, an dem der Arm 22 anschlägt, wenn sich die Halteklinke 16 in der in Fig. 4 dargestellten Halteposition befindet.

An der Unterseite des inneren Arms 21 der Halteklinke 16 ist ein Geber 23 einer im Übrigen nicht näher dargestellten Sensoranordnung angeordnet. Der Geber 23 ist im vorliegenden Fall als Reflektor ausgebildet. Ein derartiger Reflektor kann Bestandteil einer optischen Sensoranordnung sein. Eine derartige optische Sensoranordnung sendet einen Lichtstrahl in Richtung des Gebers 23 aus und hat einen Empfänger, um einen reflektierten Lichtstrahl zu empfangen. Wenn sich die Halteklinke 16 in der in Fig. 4 dargestellten Halteposition befindet, dann reflektiert der Geber 23 den Lichtstrahl zum Empfänger. In diesem Fall kann der Empfänger das Vorhandensein des Lichtstrahls feststellen und dies an eine nicht näher dargestellte Steuerung weitergeben, die ein Anheben und ein Absenken eines Behälterstapels in einem Behälteraufnahmeraum steuert. Wenn sich bei einer bestimmten Position des Behälterstapels die Halteklinke 16 nicht in der gewünschten Halteposition befindet und damit den Behälterstapel beispielsweise beim Absenken nicht halten kann, dann kann die Sensoranordnung ein Fehlersignal erzeugen. Dieses Fehlersignal kann dann von der Steuereinrichtung dahingehend ausgewertet werden, dass das weitere Absenken des Behälterstapels unterbrochen und eine Fehler- oder Störmeldung ausgegeben wird.

Die Sensoranordnung kann, muss aber nicht an der Stapellageranordnung angeordnet sein. Sie kann beispielsweise auch an einem Beschickungsfahrzeug angeordnet sein, mit dem ein Behälter in die Stapellageranordnung eingefahren wird oder mit dem ein Behälter aus der Stapellageranordnung entnommen wird.

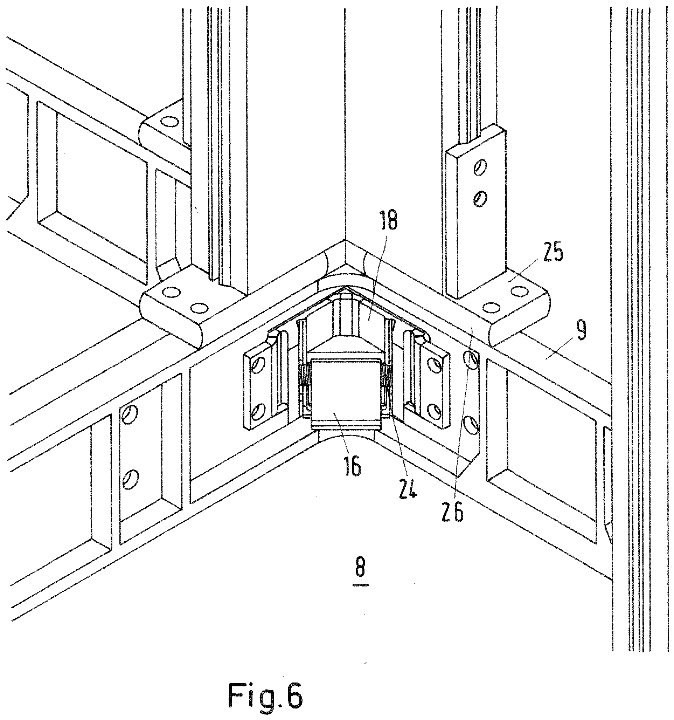

Fig. 6 zeigt die Halteklinke 16 in ihrem Halteklinkenmodul 18 eingebaut in das Modul 9. Eine Feder 24 ist vorgesehen, die den äußeren Arm der Halteklinke 16 mit einer Kraft in Richtung auf den oben erwähnten Anschlag beaufschlagt. Die Feder 24 (es können auch mehrere Federn vorgesehen sein) stellt damit sicher, dass sich die Halteklinke 16 in der in Fig. 4 dargestellten Halteposition befindet, wenn keine anderen Kräfte auf die Halteklinke 16 wirken. Zusätzlich kann der Schwerpunkt der Halteklinke 16 so angeordnet werden, dass die Halteklinke unter der Wirkung der Schwerkraft in die Halteposition schwenkt.

Das Modul 9 ist an seiner Oberseite mit einer Einführhilfe 25 versehen. Die Einführhilfe 25 befindet sich im vorliegenden Fall im Bereich der Ecken der Öffnung 8. Es können aber auch mehrere Einführhilfen 25 über den Umfang der Öffnung 8 verteilt angeordnet sein. Die Einführhilfe 25 ist dann nicht abgewinkelt, sondern geradlinig ausgebildet. Die Einführhilfe 25 weist eine abgerundete Seite 26 auf, die geringfügig nach innen in die Öffnung 8 vorsteht. Mit der Einführhilfe 25 wird das Risiko minimiert, dass ein Behälter, der in der Öffnung 8 abgesenkt wird, am Rahmen oder am Rand der Öffnung 8 hängen bleibt. Der Behälter wird durch die abgerundete Seite 26 vom Rand der Öffnung 8 weggedrängt. Die Einhführhilfe 25 kann als getrenntes Teil ausgebildet sein, dass am Modul 9 befestigt wird, oder sie kann einstückig mit dem Modul 9 ausgebildet sein.

Da eine derartige Einführhilfe 25 an jeder Ecke vorhanden sein kann, ist es damit möglich, den Behälter, der durch die Öffnung 8 bewegt wird, von allen Seiten her in Richtung auf die Mitte der Öffnung 8 zu zentrieren.

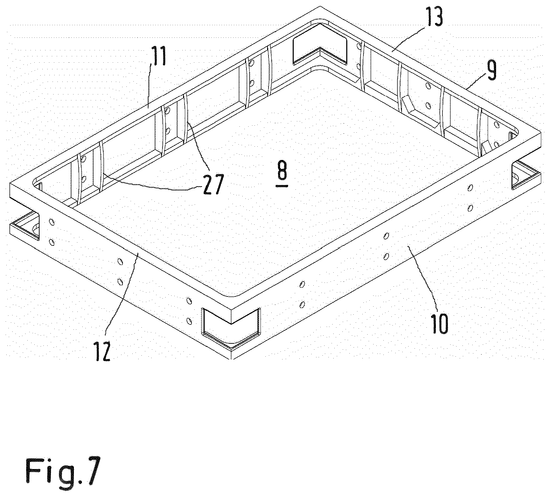

Fig. 7 zeigt eine geringfügig abgewandelte Ausführungsform, bei der eine Innenwand der Öffnung 8 nach innen in die Öffnung hinein gewölbt ist. Die Öffnung 8 ist dann an ihrer Oberseite und an ihrer Unterseite geringfügig größer als in der Mitte zwischen der Oberseite und der Unterseite. Auch damit verringert sich das Risiko, dass ein Behälter beim Weg durch die Öffnung 8 am Modul 9 hängen bleibt. Dabei muss nicht unbedingt die gesamte Innenwand der Öffnung 8 nach innen gewölbt sein. Es reicht aus, wenn an der Innenwand der Öffnung 8 Stege 27 vorgesehen sind, die die entsprechende Wölbung bilden. Im übrigen sind die Elemente in Figur sieben mit den gleichen Bezugszeichen wie in den anderen Fig. bezeichnet.

Zum Einlagern eines nicht näher dargestellten Behälters wird ein ebenfalls nicht näher dargestelltes Beschickungsfahrzeug in den Beschickungsbereich eingefahren, bis sich der Behälter unter der Öffnung 8 der Rahmenanordnung 4 befindet.

Der Behälter wird dann durch das Beschickungsfahrzeug angehoben, bis er den untersten Behälter eines bereits im Behälteraufnahmeraum befindlichen Behälterstapels erreicht und hebt dann bei einer weiteren Bewegung den Behälterstapel insgesamt mit an. Dabei werden die Halteklinken 16 aus der in Fig. 4 dargestellten Halteposition in die in Fig. 5 dargestellte Freigabeposition verschwenkt. Sobald der einzulagernde Behälter die Halteklinke 16 passiert hat, schwenkt die Halteklinke 16 wieder in ihre Halteposition (Fig. 4) zurück und der Behälterstapel kann dann auf die Halteklinken 16 abgesenkt werden. Wenn die Sensoranordnung mit dem Geber 23 allerdings zeigt, dass die Halteposition der Halteklinke 16 nicht erreicht ist, dann wird dieser Absenkvorgang unterbrochen.

Zur Entnahme eines Behälters aus der Stapellageranordnung wird der unterste Behälter des Stapels und mit ihm der gesamte Stapel von Behältern angehoben. Die Halteklinke 16 wird in die in Fig. 5 dargestellte Freigabeposition verschwenkt und der Stapel kann abgesenkt werden. Sobald der zu entnehmende Behälter die Halteklinke 16 passiert hat, wird die Halteklinke 16 wieder in ihre Halteposition (Fig. 4) verschwenkt und hält dann den Stapel am bislang vorletzten Behälter.

## Patentansprüche

1. Stapellageranordnung (1) mit mehreren Behälteraufnahmeräumen (2) und einem Beschickungsraum (3), der unterhalb der Behälteraufnahmeräume (2) angeordnet ist, wobei zwischen den Behälteraufnahmeräumen (2) und dem Beschickungsraum (3) eine Rahmenanordnung (4) angeordnet ist, bei der längs verlaufende Abschnitte durch quer verlaufende Abschnitte miteinander verbunden sind, die Rahmenanordnung (4) für jeden Behälteraufnahmeraum (2) eine Öffnung (8) aufweist, durch die der Behälteraufnahmeraum (2) beschickbar ist und **dadurch gekennzeichnet, dass** die Rahmenanordnung (4) mehrere Module (9) aufweist, die miteinander verbunden sind.

2. Stapellageranordnung nach Anspruch 1, **dadurch gekennzeichnet, dass** mindestens ein Modul (9) mehrere Öffnungen (8) aufweist.

3. Stapellageranordnung nach Anspruch 1 oder 2, **dadurch gekennzeichnet, dass** mindestens ein Modul (9) als Gussteil ausgebildet ist.

4. Stapellageranordnung nach einem der Ansprüche 1 bis 3, **dadurch gekennzeichnet, dass** eine die Öffnung (8) begrenzende Innenwand in die Öffnung (8) hinein gewölbt ist.

5. Stapellageranordnung nach einem der Ansprüche 1 bis 4, **dadurch gekennzeichnet, dass** an der Oberseite mindestens eines Moduls (9) im Bereich von mindestens einem Rand der Öffnung (8) eine Einführhilfe (25) angeordnet ist.

6. Stapellageranordnung nach einem der Ansprüche 1 bis 5, **dadurch gekennzeichnet, dass** die Öffnungen (8) Ecken aufweisen, in denen jeweils Halteklinken (16) angeordnet sind.

7. Stapellageranordnung nach Anspruch 6, **dadurch gekennzeichnet, dass** jede Halteklinke (16) an einem Träger (17) eines Halteklinkenmoduls (18) angeordnet ist, der in der Rahmenanordnung (4) befestigt ist.

8. Stapellageranordnung nach Anspruch 7, **dadurch gekennzeichnet, dass** der Träger (17) in einer Aussparung (19) in der Rahmenanordnung (4) angeordnet ist.

9. Stapellageranordnung nach einem der Ansprüche 6 bis 8, **dadurch gekennzeichnet, dass** die Halteklinke (16) um eine Schwenkachse verschwenkbar ist, die zu zwei benachbarten Seiten der Öffnung (8) einen Winkel kleiner als 90° einschließt.

10. Stapellageranordnung nach einem der Ansprüche 6 bis 9, **dadurch gekennzeichnet, dass** die Halteklinken (16) als zweiarmige Hebel mit einem inneren Arm (21) und einem äußeren Arm (22) ausgebildet sind, wobei ein Anschlag für den äußeren Arm (22) vorgesehen ist.

11. Stapellageranordnung nach Anspruch 10, **dadurch gekennzeichnet, dass** mindestens eine Feder (24) vorgesehen ist, die den äußeren Arm (22) mit einer Kraft in Richtung auf den Anschlag beaufschlagt.

12. Stapellageranordnung nach einem der Ansprüche 6 bis 11, **dadurch gekennzeichnet, dass** an jeder Halteklinke (16) ein Geber (23) einer Sensoranordnung angeordnet ist.

13. Stapellageranordnung nach Anspruch 12, **dadurch gekennzeichnet, dass** der Geber (23) an der Unterseite des inneren Arms angeordnet ist.

## Claims

1. Stack storage assembly (1) with a plurality of container receiving spaces (2) and a charging space (3) which is arranged below the container receiving spaces (2), wherein a frame arrangement (4) is arranged between the container receiving spaces (2) and the charging space (3), in which longitudinally extending sections are connected to one another by transversely extending sections, the frame arrangement (4) has, for each container receiving space (2), an opening (8) through which the container receiving space (2) can be loaded, and **characterized in that** the frame arrangement (4) has a plurality of modules (9) which are connected to one another.

2. Stack storage assembly according to claim 1, **characterized in that** at least one module (9) has several openings (8).

3. Stack storage assembly according to claim 1 or 2, **characterized in that** at least one module (9) is formed as a casting.

4. Stack storage assembly according to any of claims 1 to 3, **characterized in that** an inner wall defining the opening (8) is curved into the opening (8).

5. Stack storage assembly according to any of claims 1 to 4, **characterized in that** an insertion aid (25) is arranged on the upper side of at least one module (9) in the region of at least one edge of the opening (8).

6. Stack storage assembly according to any of claims 1 to 5, **characterized in that** the openings (8) have corners in which holding latches (16) are arranged in each case.

7. Stack storage assembly according to claim 6, **characterized in that** each holding latch (16) is arranged on a carrier (17) of a holding latch module (18) which is fixed in the frame arrangement (4).

8. Stack storage assembly according to claim 7, **characterized in that** the carrier (17) is arranged in a recess (19) in the frame arrangement (4).

9. Stack storage assembly according to any of claims 6 to 8, **characterized in that** the holding latch (16) is pivotable about a pivot axis which encloses an angle of less than 90° to two adjacent sides of the opening (8).

10. Stack storage assembly according to any of claims 6 to 9, **characterized in that** the holding latches (16) are designed as two-armed levers with an inner arm (21) and an outer arm (22), a stop being provided for the outer arm (22).

11. Stack storage assembly according to claim 10, **characterized in that** at least one spring (24) is provided which applies a force to the outer arm (22) in the direction of the stop.

12. Stack storage assembly according to any of claims 6 to 11, **characterized in that** a sensor (23) of a sensor arrangement is arranged on each holding latch (16).

13. Stack storage assembly according to claim 12, **characterized in that** the sensor (23) is arranged on the under side of the inner arm.

## Revendications

1. Dispositif de stockage par empilement (1) avec plusieurs espaces de logement de conteneurs (2) et un espace de chargement (3), qui est disposé en dessous des espaces de logement de conteneurs (2), sachant qu'entre les espaces de logement de conteneurs (2) et l'espace de chargement (3) est disposé un système de cadres (4) pour lequel des sections passant longitudinalement sont reliées entre elles par des sections passant transversalement, le système de cadres (4) comporte pour chaque espace de logement de conteneurs (2) une ouverture (8) à travers laquelle l'espace de logement de conteneurs (2) peut être chargé et **caractérisé en ce que** le système de cadres (4) comporte plusieurs modules (9), qui sont reliés entre eux.

2. Dispositif de stockage par empilement selon la revendication 1, **caractérisé en ce qu'**au moins un module (9) comporte plusieurs ouvertures (8).

3. Dispositif de stockage par empilement selon la revendication 1 ou 2, **caractérisé en ce qu'**au moins un module (9) est constitué sous la forme d'une pièce moulée.

4. Dispositif de stockage par empilement selon l'une quelconque des revendications 1 à 3, **caractérisé en ce qu'**une paroi intérieure délimitant l'ouverture (8) est bombée vers l'intérieur de l'ouverture (8).

5. Dispositif de stockage par empilement selon l'une quelconque des revendications 1 à 4, **caractérisé en ce qu'**une assistance à l'introduction (25) est disposée sur la face supérieure d'au moins un module (9) dans la zone d'au moins un bord de l'ouverture (8).

6. Dispositif de stockage par empilement selon l'une quelconque des revendications 1 à 5, **caractérisé en ce que** les ouvertures (8) comportent des coins dans lesquels sont respectivement disposés des verrous de maintien (16).

7. Dispositif de stockage par empilement selon la revendication 6, **caractérisé en ce que** chaque verrou de maintien (16) est disposé sur un support (17) d'un module de verrou de maintien (18), qui est fixé dans le système de cadres (4).

8. Dispositif de stockage par empilement selon la revendication 7, **caractérisé en ce que** le support (17) est disposé dans un évidement (19) dans le système de cadres (4).

9. Dispositif de stockage par empilement selon l'une quelconque des revendications 6 à 8, **caractérisé en ce que** le verrou de maintien (16) peut pivoter autour d'un axe de pivotement, qui forme un angle inférieur à 90° par rapport aux deux côtés adjacents de l'ouverture (8) .

10. Dispositif de stockage par empilement selon l'une quelconque des revendications 6 à 9, **caractérisé en ce que** les verrous de maintien (16) sont constitués comme des leviers à deux bras avec un bras intérieur (21) et un bras extérieur (22), sachant qu'une butée est prévue pour le bras extérieur (22).

11. Dispositif de stockage par empilement selon la revendication 10, **caractérisé en ce qu'**au moins un ressort (24) est prévu, qui sollicite le bras extérieur (22) avec une force en direction de la butée.

12. Dispositif de stockage par empilement selon l'une quelconque des revendications 6 à 11, **caractérisé en ce qu'**un détecteur (23) d'un système de détection est disposé sur chaque verrou de maintien (16).

13. Dispositif de stockage par empilement selon la revendication 12, **caractérisé en ce que** le détecteur (23) est disposé sur la face inférieure du bras intérieur.
